(19) Europäisches Patentamt
European Patent Office
Office européen des brevets

(11) **EP 1 800 548 A1**

(12) **EUROPEAN PATENT APPLICATION**
published in accordance with Art. 158(3) EPC

(43) Date of publication:
27.06.2007 Bulletin 2007/26

(51) Int Cl.:
*A23L 1/10* (2006.01)

(21) Application number: 05782267.8

(22) Date of filing: 07.09.2005

(86) International application number:
PCT/JP2005/016444

(87) International publication number:
WO 2006/028149 (16.03.2006 Gazette 2006/11)

(84) Designated Contracting States:
DE FR GB

(30) Priority: 10.09.2004 JP 2004264412

(71) Applicant: Fuji Oil Company, Ltd.
Osaka-shi,
Osaka 542-0086 (JP)

(72) Inventors:
• TAKAHASHI, Taro,
Fuji Oil Company Limited
Izumisano-shi Osaka 598-8540 (JP)

• TOYOFUKU, Yoshiko,
Fuji Oil Company Limited
Tokyo 105-0012 (JP)
• ASANO, Hirokazu,
Fuji Oil Company Limited
Tokyo 105-0012 (JP)
• SUZUKI, Kiyohito,
Fuji Oil Company Limited
Tokyo 105-0012 (JP)

(74) Representative: Manaton, Ross Timothy et al
Bromhead Johnson
19 Buckingham Street
London WC2N 6EF (GB)

(54) **OIL-IN-WATER EMULSIFICATION COMPOSITION FOR BOILED RICE AND BOILED RICE UTILIZING THE SAME**

(57) An additive for boiled rice that is used to avoid the lowering of efficiency at boiling for boiled rice or the like and to obtain a boiled rice of high quality presenting soft texture which is free from drying and sogginess resulting from moisture transfer during the storage thereof. There is provided an oil-in-water emulsification composition comprising a water soluble polysaccharide derived from soybean. High effect can be realized by the use of a water soluble soybean polysaccharide with a certain level or more of emulsifying capacity, and striking effect can be realized by the use of an emulsification composition comprising this polysaccharide with high emulsifying capacity combined with a polysaccharide having a certain level of viscosity even if its emulsifying capacity is poor.

EP 1 800 548 A1

## Description

Technical Field

The present invention relates to an emulsification composition to be used as an additive for boiled rice, or in other words, to an emulsification composition used as an additive to improve manageability during the steaming of boiled rice or to enhance the quality of the boiled rice, and more specifically it relates to an additive for boiled rice with a water-soluble polysaccharide used as an oil-in-water emulsification composition, and to boiled rice with enhanced quality by addition of the emulsification composition.

Background Art

The food service and lunch industries have seen an unrelenting expansion in recent years, along with increased distribution of processed boiled rice products such as boxed lunches and rice balls at convenience stores and the like. Such processed boiled rice products are properly cooked in mass and then distributed for sale at shops, but during this process several problems have arisen from the standpoint of manageability and quality. For example, boiled rice clumps may form by adhesion of the boiled rice grains, or the boiled rice may not readily release from the rice cooker, resulting in poor manageability and productivity, while the boiled rice may also progressively harden during the period from manufacture to consumption, exhibiting a crumbly texture and generally having reduced quality. In addition, the quality can deteriorate as a result of partial drying of the surface by evaporation of moisture during warmed storage in boiled rice containers, sogginess of the rice due to condensation of the evaporated water vapor, and migration of moisture between the boiled rice and the other food materials in the processed boiled rice.

This has conventionally been countered by addition of "rice boiling oil" during boiling, which improves release from the cooker and loosens the rice grains. However, oil that has been merely added does not uniformly disperse in the boiled rice, and has tended to be uneven. For this reason, several methods of adding emulsifying agents or lecithin to aid in oil dispersion have been proposed (Patent documents 1-3), but either the dispersibility has been insufficient or the increased oil content has impaired taste, and therefore further improvement is still desired.

A method of adding soybean-derived water-soluble polysaccharides during boiling has been disclosed (Patent document 4), whereby boiled rice is satisfactorily loosened and deterioration of texture during storage of the boiled rice is also prevented. Although this method improves release from the cooker and loosens the rice to some extent without employing oils while also providing an effect against aging of the starch, mere addition of a water-soluble polysaccharide alone fails to maintain the plump texture of the grains, which is exhibited immediately after boiling, throughout the period after boiling and during distribution until the time of consumption, and for this reason there remains much room for improvement. Furthermore, measures must be taken against drying and sogginess due to migration of moisture of the boiled rice, and no satisfactory method has yet been demonstrated that can suitably solve all of these problems.

Patent document 1: Japanese Unexamined Patent Publication No. 11-155484
Patent document 2: Japanese Unexamined Patent Publication No. 2002-153209
Patent document 3: Japanese Unexamined Patent Publication No. 2003-339317
Patent document 4: Japanese Unexamined Patent Publication No. 2001-314161

DISCLOSURE OF THE INVENTION

Problems to be Solved by the Invention

The present invention provides an additive for boiled rice which improves the problems of poor manageability in terms of loosening of boiled rice and release from the cooker, while also yielding boiled rice with a plump texture and with minimal loss of quality due to sogginess and drying caused by migration of moisture during storage of the boiled rice after boiling, and thus having satisfactory overall quality.

Means for Solving the Problems

As a result of much diligent research directed toward solving the problems mentioned above, the present inventors have completed this invention upon finding that an excellent effect is provided by adding soybean-derived water-soluble polysaccharides in the form of an oil-in-water emulsification composition, and that a particularly notable effect is exhibited when using a polysaccharide with emulsifying power above a certain level. Specifically, the invention provides an oil-in-water emulsification composition for boiled rice obtained using a soybean-derived water-soluble polysaccharide, an oil-in-water emulsification composition for boiled rice using a soybean-derived water-soluble polysaccharide with high emulsifying power, and an additive for boiled rice which utilizes a soybean-derived water-soluble polysaccharide that exhibits the aforementioned emulsifying power and a soybean-derived water-soluble polysaccharide that does not exhibit the aforementioned degree of emulsifying power but has a 10% aqueous solution viscosity of 30 mPa·s or greater. The invention further provides a food texture improver comprising the aforementioned emulsification composition as an active ingredient, and a moisture migration inhibitor for boiled rice that also comprises the aforementioned emulsification composition as an active ingredient. The invention still further provides boiled rice to which the aforementioned emulsification composition has been added.

Effect of the Invention

The emulsification composition of the invention may be added during cooking of boiled rice for preparation of a boiled rice product on an industrial scale, in order to yield an appetizing and plump boiled rice product with almost no problems of manageability caused by adhesion of boiled rice grains during cooking or by poor releasability from the rice cooker, as well as minimal loss of quality due to aging of the boiled rice or migration of moisture after cooking.

Best Mode for Carrying Out the Invention

The soybean-derived water-soluble polysaccharide (hereinafter, "water-soluble soybean polysaccharide") of the invention is obtained by hot extraction from soybean or processed soybean, and the physical properties and function of the product will differ somewhat depending on the extraction conditions.

The water-soluble soybean polysaccharide may be obtained by heating soybean or processed soybean under acidic or alkali conditions, preferably at a pH near the isoelectric point of soybean protein, and preferably at a temperature between 80°C and 130°C or more preferably between 100°C and 130°C, separating the water-soluble fraction, and then either drying it directly or drying it after active carbon treatment, resin adsorption treatment or ethanol precipitation treatment for removal of the hydrophobic substances or low molecular substances. It may also be decomposed and extracted by enzyme treatment with hemicellulase or pectinase.

Water-soluble soybean polysaccharide with high emulsifying power can be obtained by hot extraction from soybean or soybean extract at an acidic pH which is a pH lower than the isoelectric point of soybean protein, preferably at pH 2.4-4.0 and even more preferably at pH 3.0-3.5, and at a temperature exceeding 100°C. Water-soluble soybean polysaccharide with high emulsifying power exhibits a powerful effect of stabilizing emulsions with rice boiling oil components and particularly of producing boiled rice with satisfactory looseness and release from the cooker, and a plump texture. The high emulsifying power referred to here means an emulsifying power whereby a stable emulsion is formed by a composition containing at least a 5-fold amount of oil with respect to the weight of the polysaccharide. The reference to a composition containing at least a 5-fold amount of oil with respect to the polysaccharide does not mean that the amount of polysaccharide used is such that the emulsification composition always has at least a 5-fold amount of oil with respect to the polysaccharide, but rather that the system in which the emulsifying power of the polysaccharide is evaluated is a system with such a high oil content. Emulsifying power is usually evaluated with the particle size of an emulsion obtained in a system with a low oil content, but the difference in emulsifying power is often difficult to determine by such an evaluation method, and therefore in this case a system with a high oil content was used as the evaluating system to accentuate the differences in emulsifying power.

A "stable emulsion" in terms of emulsifying power that can form a stable emulsion is an emulsion with an emulsified particle size of no greater than 5 $\mu$, where stability is maintained even after storage of the emulsion for one month at 5°C.

The viscosity of the water-soluble soybean polysaccharide affects the water retention, and the viscosity must be above a certain value for a satisfactory water retention function. The viscosity is preferably 30 mPa·s or greater with a 10% solution. If the viscosity is too low, the effect of improving the water retention may not be sufficient. However, an excessive viscosity will impair the manageability, and therefore the viscosity is preferably between 30 and 300 mPa·s.

A polysaccharide with a 10% solution viscosity of 30 mPa·s or greater can be obtained by the methods described in paragraphs [0010] and [0011] above, but even if the viscosity of a product obtained by such methods is not at least 30 mPa·s with a 10% solution, it is still possible to obtain a polysaccharide with a viscosity in the desired range by removing the low molecular fraction by active carbon treatment, or precipitation treatment with an ethanol solution.

A water-soluble soybean polysaccharide obtained by an ordinary method, and without limiting the production conditions, will basically exhibit an effect if used as an additive in an oil-in-water emulsification composition, but a water-soluble soybean polysaccharide extracted at a pH lower than the isoelectric point of soybean protein, having strong emulsifying power and capable of stabilizing an oil-in-water emulsification composition containing at least a 5-fold oil content with respect to the weight of the polysaccharide, will exhibit a notable effect of loosening, aiding release from the cooker and providing a satisfactory texture. It is more preferred to use a polysaccharide with strong emulsifying power and a polysaccharide without such strong emulsifying power but having a 10% solution viscosity of at least 30 mPa·s, for a more notable effect of improving the water retention effect and enhancing the quality of the boiled rice. In this case, the proportion of each polysaccharide used is not particularly restricted but will normally be acceptable in the range of 1:9-9:1.

There are no particular restrictions on the oil or fat for the oil phase of the oil-in-water emulsification composition, and as examples there may be mentioned animal and vegetable fats and oils such as soybean oil, corn oil, cottonseed oil, rapeseed oil, rice oil, coconut oil, palm oil, palm kernel oil, peanut oil, cacao butter, milk fat, beef tallow, lard, butter and the like, as well as their processed forms obtained by hydrogenation, transesterification, fractionation and the like. Preferred among these are fats and oils containing rice oil, since they satisfactorily improve the taste of boiled rice and have excellent oxidation stability.

The oil phase content is not particularly restricted and may be adjusted depending on the purpose of use, but it is preferably no greater than 50% and more preferably no greater than 40% based on the weight of the oil-in-water emulsification composition. If used at greater than 50%, the viscosity may increase to the point of impairing the manageability.

The emulsification composition of the invention can be easily emulsified by use of the water-soluble soybean polysaccharide alone, and if no emulsifying agent is used it is possible to prepare an excellent composition from the standpoint of safety and flavor. However, there is no problem with using an emulsifying agent for the invention. If necessary, there may also be included one or a combination of two or more emulsifying agents from among lecithin, enzyme-treated lecithin, fatty acid glycerin esters and their derivatives (glycerin fatty acid esters, monoglyceride acetate, monoglyceride lactate, monoglyceride citrate, monoglyceride succinate, monoglyceride diacetyltartrate, polyglycerin fatty acid esters, etc.), sorbitan fatty acid esters, propylene glycol fatty acid esters, sucrose fatty acid esters (sugar esters) and the like.

The content of the water-soluble soybean polysaccharide in the oil-in-water emulsification composition is not particularly restricted, but is preferably 0.02-30 wt% and more preferably 0.05-20 wt% in the oil-in-water emulsification composition. If it is used in too small an amount the emulsified state may be unstable, and if it is used in too large an amount the viscosity may increase to the point of hampering the manageability.

The median particle size of the oil-in-water emulsification composition is preferably 0.5-30 $\mu$m and more preferably 1-20 $\mu$m, as the oiliness and shelf-life are satisfactory within this range. If the size is too large, the shelf-life may be poor.

The aqueous phase may contain, in addition to the water-soluble soybean polysaccharide, added sugars such as rice jelly, or polyhydric alcohols such as glycerin, erythritol, D-sorbitol, propylene glycol and the like, to improve the effect of preventing aging of the boiled rice.

While an adequate effect can be obtained with only the components mentioned above, in some cases there may be used monosaccharides such as ribose, arabinose, xylose, glucose, galactose and mannose, oligosaccharides such as sucrose, maltose, lactose, trehalose, raffinose, stachyose, fructo-oligosaccharide, galacto-oligosaccharide, xylo-oligosaccharide, lactosucrose, isomalto-oligosaccharide, starch decomposition product, guar gum decomposition product, cellulose hydrolysate and the like, and polysaccharides such as pectin, gum arabic, carrageenan, xanthan gum, gelan gum, guar gum, locust bean gum, tamarind seed polysaccharide, psyllium seed gum, cellulose, starch, processed starch and the like. There may also be used therewith alcohols such as ethanol, glycerin, ethylene glycol and propylene glycol. For increased storage life, organic acids such as lactic acid and acetic acid or organic acid salts may also be added.

The oil-in-water emulsification composition of the invention may be produced by any conventional publicly known process. Specifically, the oil phase containing the oil-soluble substances and the aqueous phase containing the water-soluble substances may be prepared using an ordinary homogenizer, such as a colloid mill, high-pressure homogenizer or the like.

The amount of oil-in-water emulsification composition added is not particularly restricted, but may be in the range of 0.01%-10% and preferably 0.05%-5% with respect to the raw rice before boiling.

The oil-in-water emulsification composition for boiled rice according to the invention has an excellent shelf-life and, for example, can be stored at ordinary temperature for approximately 6 months. A particularly excellent shelf-life is exhibited if the composition contains a water-soluble soybean polysaccharide extracted at pH 3.0-3.5.

The timing for addition of the oil-in-water emulsification composition is not particularly restricted, and it may be added either prior to boiling or after boiling of the boiled rice. However, it is most efficiently added before boiling for enhanced texture of the boiled rice and prolonged storage life.

Examples

Examples of the invention will now be explained, with the understanding that these are only illustrative and do not restrict the scope of the invention in any way. The "parts" and "%" values mentioned in the examples are all based on weight.

<Production Example 1> Preparation of water-soluble soybean polysaccharide (1)

A two-fold amount of water was added to raw okara obtained from a soybean protein isolate production process, the pH was adjusted to 3.0 with hydrochloric acid, and hot extraction was performed at 120°C for 1.5 hours. The pH of the cooled hot extraction slurry was 2.98. After adjusting the pH of the recovered slurry to 5.0, it was centrifuged (10,000 G x 30 min) and the supernatant and precipitate were separated. The separated precipitate portion was rinsed with an equivalent weight of water, centrifugation was performed again, and the supernatant was combined with the previous supernatant prior to desalting treatment by electrodialysis, after which it was dried to obtain water-soluble soybean polysaccharide A.

<Production Example 2> Preparation of water-soluble soybean polysaccharide (2)

A two-fold amount of water was added to raw okara obtained from a soybean protein isolate production process, the pH was adjusted to 4.5 with hydrochloric acid, and hot extraction was performed at 120°C for 1.5 hours. After cooling, centrifugation was performed (10,000 G x 30 min) and the supernatant and precipitate were separated. An equivalent weight of water was added to the separated precipitate, the mixture was again centrifuged, the supernatant was combined with the previous supernatant and the mixture was passed through an active carbon column for purification and then dried to obtain water-soluble soybean polysaccharide B.

<Reference Test> Physical property of water-soluble polysaccharide (1): Viscosity

The 10% aqueous solution viscosities of the water-soluble soybean polysaccharides obtained in Production Examples 1 and 2 were as follows.
Water-soluble soybean polysaccharide A: 8 mPa·s. Water-soluble soybean polysaccharide B: 72 mPa·s.

<Reference Test>

Physical property of water-soluble polysaccharide (2): emulsifying power

Aqueous phases were prepared with the compositions listed in Table 1, and the oil phases were added prior to stirring for 10 seconds with a test tube mixer. The mixture was then subjected to ultrasonic emulsification (30 sec x 2) with an ultrasonic generator (Model 5281 oscillator, product of Kaijo Denki Co., Ltd.) for 1 minute while cooling on ice, and then emulsified for 30 seconds and stirred for 10 seconds with a test tube mixer, after which the emulsified particle size was measured and the emulsified state was observed. The results are shown in Table 2. (Particle size distribution meter: SALD by Shimadzu Corp.)
(Table 1) Preparation of emulsion

| No. Oil phase | 1 (High-oil system) 400 µl soybean oil | 2 (Medium-oil system) 250 µl soybean oil |
|---|---|---|
| Aqueous phase Water-soluble soybean polysaccharide solution (A or B) (dissolved in distilled water) | 5% solution: 300 µl<br><br>Buffer solution: 300 µl<br>pH 4.0*<br>pH 7.0** | 10% solution: 375 µl<br><br>Buffer solution: 375 µl<br>pH 4.0*<br>pH 7.0** |
| Oil content | 40% | 25% |
| Oil/polysaccharide ratio | 26.7 | 6.7 |
| *pH 4.0 buffer solution: 100 mM Na citrate·HCl buffer (pH 4.0)<br>**pH 7.0 buffer solution: 100 mM 2Na phosphate·HCl buffer (pH 7.0) | | |

(Table 2) Emulsification test results

| | Oil portion: 40% | | Oil portion: 25% | |
|---|---|---|---|---|
| | pH 4.0 | pH 7.0 | pH 4.0 | pH 7.0 |
| Water-soluble soybean polysaccharide A | G (3.7) | G (3.7) | G (1.3) | G (1.4) |
| Water-soluble soybean polysaccharide B | P (38.4) | P (65.7) | G (6.8) | F (14.7) |
| () Emulsified particle size ($\mu$m)<br>(Emulsified state) Good (G): Satisfactorily emulsified, Fair (F): Separated after a period,<br>Poor (P): Separated | | | | |

<Emulsion storage test>

When the state of each of the aforementioned emulsions was observed after storage in a refrigerator for one month, the emulsions obtained with water-soluble polysaccharide A all maintained stable emulsified states, while the emulsions with oil contents of 25% with water-soluble polysaccharide B exhibited separation of the oil portions.
Thus, stable emulsions can be obtained in systems with high oil contents using water-soluble polysaccharide A, but with water-soluble polysaccharide B it was not possible to obtain a satisfactory emulsion in a system with a 26.7-fold oil content, and although an emulsion was obtained in a system with a 6.7-fold oil content, its shelf-life was insufficient.

<Example 1>

Preparation of oil-in-water emulsification composition for boiled rice (1)

After adding 3 parts of the water-soluble polysaccharide A obtained in Production Example 1 to 54 parts of water, the mixture was heated to 60°C for dissolution. After dissolution, 1 part of lactic acid and 2 parts of Na lactate were added for pH regulation. Next, 20 parts of rapeseed oil and 20 parts of rice oil were gradually added while maintaining a temperature of 60°C, and the mixture was subjected to pre-emulsification with a homomixer (TK Mixer, product of Primix Corp.) at 8000 rpm, 30 minutes, after which a high-pressure homogenizer was used for homogenization at 50 kg/cm$^2$ to obtain emulsification composition C.

<Example 2>

Preparation of oil-in-water emulsification composition for boiled rice (2)

To 49 parts of water there were added 3 parts of the water-soluble polysaccharide A obtained in Production Example 1 and 5 parts of the water-soluble soybean polysaccharide B obtained in Production Example 2, and the mixture was heated to 60°C for dissolution. After dissolution, 1 part of lactic acid and 2 parts of Na lactate were added for pH regulation. Next, 20 parts of rapeseed oil and 20 parts of rice oil were gradually added while maintaining a temperature of 60°C, and the mixture was subjected to pre-emulsification with a homomixer (TK Mixer, product of Primix Corp.) at 8000 rpm, 30 minutes, after which a high-pressure homogenizer was used for homogenization at 50 kg/cm$^2$ to obtain emulsification composition D.

<Example 3>

Preparation of oil-in-water emulsification composition for boiled rice (3)

To 44 parts of water there were added 3 parts of the water-soluble polysaccharide A obtained in Production Example 1 and 5 parts of the water-soluble soybean polysaccharide B obtained in Production Example 2, and after further addition of 5 parts of erythritol, the mixture was heated to 60°C for dissolution. Next, 20 parts of rapeseed oil and 20 parts of rice oil were gradually added while maintaining a temperature of 60°C, and the mixture was subjected to pre-emulsification with a homomixer (TK Mixer, product of Primix Corp.) at 8000 rpm, 30 minutes, after which a high-pressure homogenizer was used for homogenization at 50 kg/cm$^2$ to obtain emulsification composition E.

<Comparative Example 1>

Preparation of oil-in-water emulsification composition for boiled rice (4)

To 56 parts of water there were added 0.3 part of lecithin and 0.7 part of glycerin fatty acid ester, and the mixture was heated to 60°C for dissolution. After dissolution, 1 part of lactic acid and 2 parts of Na lactate were added as an adjustor. Next, 20 parts of rapeseed oil and 20 parts of rice oil were gradually added while maintaining a temperature of 60°C, and the mixture was subjected to pre-emulsification with a homomixer (TK Mixer, product of Primix Corp.) at 8000 rpm, 30 minutes, after which a high-pressure homogenizer was used for homogenization at 50 kg/cm$^2$ to obtain emulsification composition F.

After boiling rice by the method described below and the observing the condition of release from the cooker, 100 g of the cooled rice was wrapped and stored for 24 hours in a thermostat at 20°C, and the looseness, taste and plumpness of the rice (anti-aging effect) were organoleptically evaluated. The looseness and plumpness were also measured as physical properties using a tensipresser.

<Example 4>

Rice boiling test (1)

A 500 g portion of raw rice was soaked in water for 1 hour and was weighed 15 minutes after draining, yielding a 630 g portion of soaked rice. Next, 570 g of water was added to the soaked rice, at an amount of 1.4-fold with respect to the raw rice. A 15 g portion of the oil-in-water emulsification composition for boiled rice C was then added and the mixture was boiled using a household rice cooker (product of Sanyo Electric Co., Ltd.)

<Example 5>

Rice boiling test (2)

Rice was boiled in the same manner as the rice boiling test (1), except that emulsification composition D was used as the oil-in-water emulsification composition for boiled rice.

<Example 6>

Rice boiling test (3)

Rice was boiled in the same manner as the rice boiling test (1), except that emulsification composition E was used as the oil-in-water emulsification composition for boiled rice.

<Control group 1>

Rice boiling test (4): Control

A 500 g portion of raw rice was soaked for 1 hour, water was added 15 minutes after draining to a 1.4-fold amount with respect to the raw rice, and the mixture was boiled using a household rice cooker (product of Sanyo Electric Co., Ltd.)

<Comparative Example 2>

Rice boiling test (5)

A 500 g portion of raw rice was soaked for 1 hour, water was added 15 minutes after draining to a 1.4-fold amount with respect to the raw rice, and then 1.5 g of the water-soluble soybean polysaccharide B obtained in Production Example 2 was added and the mixture was boiled using a household rice cooker (product of Sanyo Electric Co., Ltd.)

<Comparative Example 3>

Rice boiling test (6)

A 500 g portion of raw rice was soaked for 1 hour, water was added 15 minutes after draining to a 1.4-fold amount with respect to the raw rice, and then 15 g of the oil-in-water emulsification composition for boiled rice F for boiled rice obtained in Comparative Example 1 was added and the mixture was boiled using a household rice cooker (product of Sanyo Electric Co., Ltd.)

<Comparative Example 4>

Rice boiling test (7)

A 500 g portion of raw rice was soaked for 1 hour, water was added 15 minutes after draining to a 1.4-fold amount with respect to the raw rice, and then 6 g of commercially available salad oil was added as a rice boiling oil and the rice was boiled using a household rice cooker (product of Sanyo Electric Co., Ltd.)
(Table 3) Results of organoleptic evaluation

|  | Example 4 | Example 5 | Example 6 | Control group 1 | Comp. Ex. 2 | Comp. Ex. 3 | Comp. Ex. 4 |
|---|---|---|---|---|---|---|---|
| Release from cooker | VG | VG | VG | P | G | G | F |
| Looseness | G | G | G | P | G | G | F |
| Plumpness (after 24 hrs cooking) | G | G | VG | P | F-G | F | F |
| Taste | G | G | G | G | F-G | P | P |
| Release from cooker: Very good (VG): Absolutely no rice remaining in cooker, Good (G): Several rice grains remaining in cooker, Fair (F): Numerous rice grains remaining in cooker, Poor (P): Rice clumps remaining in cooker<br>Looseness: Good (G): Very loose, Fair (F): Poor looseness in some portions, Poor (P): Poor looseness overall<br>Plumpness: Very Good (VG): Plump, Good (G): Some plumpness, Fair (F): Somewhat hard, Poor (P): Hard<br>Taste: Good (G): Good, Fair (F): Slight off-taste, Poor (P): Off-taste | | | | | | | |

Boiled rice evaluation (looseness): Value according to tensipresser analysis

The boiled rice grains were compressed by two-bite analysis using a tensipresser (My Boy System, product of Taketomo Denki Co., Ltd.) at low compression (30% compression with respect to rice grain height) and high compression (90% compression with respect to rice grain height), and the value of A3 as the area of adhesion when lifting with low compression was recorded as the looseness of the boiled rice. The measurement was carried out for each grain, and the average of 10 grains was recorded. A lower A3 value represents lower stickiness of the rice grain surface and therefore superior looseness.

(Evaluation of plumpness)

This was evaluated by multiple bite analysis using a tensipresser. Each rice grain was pressed twice for every 0.2 mm, and the recovery factor of the 15th and 16th rice grains (pressed to 1.6 mm) was determined from the ratio of stress after forcing back with a plunger and was recorded as the "plumpness". A higher recovery factor indicates superior plumpness.

$$Recovery\ factor\ \% = (16th\ stress)/(15th\ stress) \times 100$$

(Boiled rice evaluation)

The A3 values indicating the looseness and the recovery factors (%) indicating the plumpness are shown below in Table 4. The results for Examples 1-3 were superior to the control group and comparative examples in terms of looseness and plumpness.
(Table 4) Looseness and plumpness after 24 hours

|  | Example 4 | Example 5 | Example 6 | Control group 1 | Comp. Ex. 2 | Comp. Ex. 3 | Comp. Ex. 4 |
|---|---|---|---|---|---|---|---|
| A3 value | 62.1 | 60.2 | 62.8 | 148.6 | 61.7 | 57.2 | 65.3 |
| Recovery factor | 59.6 | 57.3 | 63.2 | 38.6 | 50.2 | 42.5 | 44.7 |

<Example 7>

Preparation of oil-in-water emulsification composition for boiled rice (5)

To 65 parts of water there were added 2 parts of the water-soluble polysaccharide A obtained in Production Example 1 and 10 parts of the water-soluble soybean polysaccharide B obtained in Production Example 2, and the mixture was heated to 60°C for dissolution. After dissolution, a mixture of 1 part lactic acid and 2 parts Na lactate was added as an adjustor. Next, 10 parts of rapeseed oil and 10 parts of rice oil were gradually added while maintaining a temperature of 60°C, and the mixture was subjected to pre-emulsification with a homomixer (TK Mixer, product of Primix Corp.) at 8000 rpm, 30 minutes, after which a high-pressure homogenizer was used for homogenization at 50 kg/cm$^2$ to obtain emulsification composition G.
The boiled rice was loosened by the method described below, the total amount was wrapped in a boiled rice sheet (400 x 330 x 500 mm rice guard, product of Tomoe Co., Ltd.), and the condition of sogginess of the rice due to water vapor and its condensation was periodically evaluated after 3 hours of storage in a boiled rice container (keeping a temperature of ≥75°C). As seen by the results in Table 5, the example with addition of the emulsification composition of the invention had minimal migration of moisture with time, allowing incubated storage of the rice in a satisfactory condition.

<Example 8>

Rice boiling test (8)

After soaking 4000 g of raw rice in water for 1 hour, the water was drained for 15 minutes to obtain 5000 g of soaked rice. Next, 5000 g of water was added to the soaked rice, and then 100 g of the oil-in-water emulsification composition G for boiled rice obtained in Example 7 was added and the mixture was boiled with a business rice cooker (product of Zojirushi Corp.)

<Control group 2>

Rice boiling test (9)

Rice was boiled in the same manner as Example 8, except that the oil-in-water emulsification composition for boiled rice obtained in Example 7 was not added.

<Comparative Example 5>

Rice was boiled in the same manner as the rice boiling test (8), except that 20 g of rice boiling oil (commercially available salad oil) was added instead of the emulsification composition obtained in Example 7.
(Table 5) (Boiled rice evaluation results)

| | | Example 8 | Control group 2 | Comp. Ex. 5 |
|---|---|---|---|---|
| | 0 hr | G moisture content: 65.8% | G moisture content: 64.5% | G moisture content: 64.1% |
| | 1 hr | G moisture content: 63.3% | F moisture content: 68.2% | G moisture content: 66.3% |
| | 2 hr | G moisture content: 65.0% | P moisture content: 70.2% | F-G moisture content: 68.0% |
| | 3 hr | G moisture content: 66.6% | P moisture content: 71.9% | P moisture content: 68.8% |
| Good (G): Minimal sogginess, grain texture<br>Fair (F): Sogginess, some gruel-like rice at container bottom<br>Poor (P): Considerable sogginess, notable gruel-like balls at container bottom | | | | |

The condition of boiled rice after storage in the boiled rice container (75°C) was examined, and the moisture in the rice at the bottom of container was measured (sampling the rice at three locations at the bottom and calculating the average).

Fried bean curd stuffed with rice, prepared by the method described below, was evaluated visually and organoleptically in terms of the sogginess of the boiled rice due to moisture seeping from the included food materials after a period of 24 hours.

<Example 9>

After frying 40 g of thinly cut burdock, 20 g of lotus root, 30 g of carrot and 50 g of steamed bamboo shoot in 30 g of heated salad oil, the fried mixture was added to a combined seasoning comprising 15 g of sake, 15 g of sugar, 15 g of sweet sake and 15 g of soy sauce, and frying was continued until elimination of the sauce, after which the mixture was cooled (condiment for fried bean curd stuffed with rice).

After placing a sauce comprising 300 g of seasoning, 60 g of sake, 15 g of sweet sake, 60 g of sugar and 45 g of soy sauce in a pot, parboiled fried bean curd was added and the mixture was allowed to cook until elimination of the sauce and then cooled (fried bean curd stock).

After soaking 320 g of raw rice for 1 hour, 320 g of water was added, 6.4 g of the aforementioned oil-in-water emulsification composition for boiled rice (G5) was added, and the rice was cooked using a household rice cooker (product of Sanyo Electric Co., Ltd.) The boiled rice was transferred to a sushi tub, and 70 g of sushi vinegar was added and mixed with it while draining. The rice was cooled to skin temperature, and the aforementioned condiment was mixed with it and was formed into the pocket of the fried bean curd lightly squeezed to remove the excess sauce.

<Control group 3>

Fried bean curd stuffed with rice was produced in the same manner as Example 9, except that the oil-in-water emulsification composition for boiled rice (G) was not added.

<Comparative Example 6>

Fried bean curd stuffed with rice was produced in the same manner as Example 9, except that the rice was cooked with addition of 1.3 g of commercially available salad oil instead of the oil-in-water emulsification composition for boiled rice (G).

The boiled rice was evaluated in terms of outer appearance and sensory quality (texture when consumed). The results are shown in Table 6.

(Table 6) Results of moisture migration from condiment after 24 hour storage

| | Example 9 | Control group 3 | Comp. Example 6 |
|---|---|---|---|
| Outer appearance | G | P | F |

(continued)

|  | Example 9 | Control group 3 | Comp. Example 6 |
|---|---|---|---|
| Organoleptic evaluation | G | P | F |
| Outer appearance<br>Good (G): Almost no sogginess, grain texture of rice maintained<br>Fair (F): Some sogginess<br>Poor (P): Considerable sogginess, sticky rice<br>Organoleptic evaluation<br>Good (G): Almost no soggy rice grains, full rice grain texture<br>Fair (F): Some soggy portions, loss of rice grain texture<br>Poor (P): Rice soggy, mushy and sticky | | | |

<Example 10>

Deboned chicken meat was cut to 2 cm squares and seasoned with salt and pepper. Onion was blanched and preheated in a microwave oven, and then cut to 1 cm squares. Bell pepper was lightly boiled and cut to the same size. The chicken meat was cooked on high flame and sprinkled with a small amount of white wine. Butter was added, the onion and bell pepper were lightly cooked and rice that had been boiled in the same manner as Example 6 was added, after which demigras sauce and bouillon were added and the mixture was cooked until elimination of the water.

After allowing the finished chicken meat pilaf to cool and packing it into a container, it was rapidly frozen to -20°C and put in frozen storage. After one month of frozen storage, an amount (500 g) was taken out and gently loosened, set flat on a plate and then gently wrapped and heated in a microwave oven at 500 W for 8 minutes. The finished pilaf was easy to loosen, could be uniformly heated in a short period of time, and had a delicious taste. Even when cooled after preparation, it exhibited little stickiness or rice grain hardness, and maintained its delicious taste. The frozen product was also easily loosened when removed, allowing the necessary amount to be taken out.

**Claims**

1. An oil-in-water emulsification composition for boiled rice, which is obtained using a soybean-derived water-soluble polysaccharide.

2. An oil-in-water emulsification composition for boiled rice according to claim 1, which employs a soybean-derived water-soluble polysaccharide with high emulsifying power.

3. An oil-in-water emulsification composition for boiled rice according to claim 1, which employs a soybean-derived water-soluble polysaccharide that exhibits high emulsifying power and a soybean-derived water-soluble polysaccharide that exhibits ordinary emulsifying power but has a 10% aqueous solution viscosity of 30 mPa·s or greater.

4. A food texture improver for boiled rice that comprises an emulsification composition according to claim 1 as an active ingredient.

5. A moisture migration inhibitor for boiled rice that comprises an emulsification composition according to claim 1 as an active ingredient.

6. Boiled rice to which an emulsification Composition according to claim 1 has been added.

| INTERNATIONAL SEARCH REPORT | International application No. |
|---|---|
| | PCT/JP2005/016444 |

| A. CLASSIFICATION OF SUBJECT MATTER |
|---|
| Int.Cl$^7$  A23L1/10 |

According to International Patent Classification (IPC) or to both national classification and IPC

| B. FIELDS SEARCHED |
|---|

| Minimum documentation searched (classification system followed by classification symbols) |
|---|
| Int.Cl$^7$  A23L1/10 |

| Documentation searched other than minimum documentation to the extent that such documents are included in the fields searched |
|---|
| Jitsuyo Shinan Koho          1922-1996   Jitsuyo Shinan Toroku Koho     1996-2005 |
| Kokai Jitsuyo Shinan Koho    1971-2005   Toroku Jitsuyo Shinan Koho     1994-2005 |

Electronic data base consulted during the international search (name of data base and, where practicable, search terms used)

| C. DOCUMENTS CONSIDERED TO BE RELEVANT |
|---|

| Category* | Citation of document, with indication, where appropriate, of the relevant passages | Relevant to claim No. |
|---|---|---|
| X | JP 2001-204407 A  (Honen Corp.), | 1-4,6 |
| Y | 31 July, 2001 (31.07.01), | 5 |
| | Claims | |
| | (Family: none) | |
| | | |
| Y | JP 2001-314161 A  (San-Ei Gen F.F.I., Inc.), | 5 |
| | 13 November, 2001 (13.11.01), | |
| | Claims; Par. No. [0015] | |
| | (Family: none) | |
| | | |
| Y | JP 2001-178384 A  (Tadahiro IWAMOTO), | 5 |
| | 03 July, 2001 (03.07.01), | |
| | Claims; Par. No. [0008] | |
| | & EP 1108366 A1          & US 6316042 B1 | |

| [X] Further documents are listed in the continuation of Box C. | [ ] See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 27 September, 2005 (27.09.05) | 11 October, 2005 (11.10.05) |

| Name and mailing address of the ISA/ | Authorized officer |
|---|---|
| Japanese Patent Office | |
| Facsimile No. | Telephone No. |

Form PCT/ISA/210 (second sheet) (January 2004)

| | INTERNATIONAL SEARCH REPORT | International application No. |
|---|---|---|
| | | PCT/JP2005/016444 |

C (Continuation).   DOCUMENTS CONSIDERED TO BE RELEVANT

| Category* | Citation of document, with indication, where appropriate, of the relevant passages | Relevant to claim No. |
|---|---|---|
| P,X | JP 2005-130788 A  (Kabushiki Kaisha Mitsukan Group Honsha),<br>26 May, 2005 (26.05.05),<br>Claims<br>(Family: none) | 1-6 |

Form PCT/ISA/210 (continuation of second sheet) (January 2004)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 11155484 A
- JP 2002153209 A
- JP 2003339317 A
- JP 2001314161 A